# EUROPEAN PATENT SPECIFICATION

(11) **EP 1 705 388 B1**
(45) Date of publication and mention of the grant of the patent: **04.07.2007**
(21) Application number: 05006671.1
(22) Date of filing: 24.03.2005
(51) Int. Cl.: F16B 27/00, B25B 23/04

(54) **Screw strip**
Schraubenband
Bandeau à vis

(43) Date of publication of application: 27.09.2006
(73) Proprietor: Lin, Chao-Wei, E. Dist., Tainan City (TW)
(72) Inventor: Lin, Chao-Wei, E. Dist., Tainan City (TW)
(74) Representative: Kahlhöfer, Hermann

(56) References cited:
- US-A- 5 522 687
- US-A- 5 913 421

## Description

This invention relates to a screw holder, and more particularly to a screw strip for holding a plurality of screws thereon.

Referring to Fig. 1, a conventional screw strip 1 as e.g. known from US-A- 5,522,687 and corresponding to the preamble of claim 1, includes an elongated strip body 11 having a plurality of equidistant positioning holes 12, and a plurality of sleeves 13 extending downwardly from the strip body 11 and in spatial communication with the positioning holes 12, respectively. Screws 2 are inserted respectively through the positioning holes 12, and are retained respectively within the sleeves 13. Use of the screw strip 1 involves driving the screws 2 by a powered driving tool (not shown) such that the sleeves 13 are ruptured by heads of the screws 2 during passage of the screws 2 therethrough. However, since the screw strip 1 is made by a plastic injection-molding process, the manufacturing costs are relatively high. Similar devices are known from US-A-5,913,421.

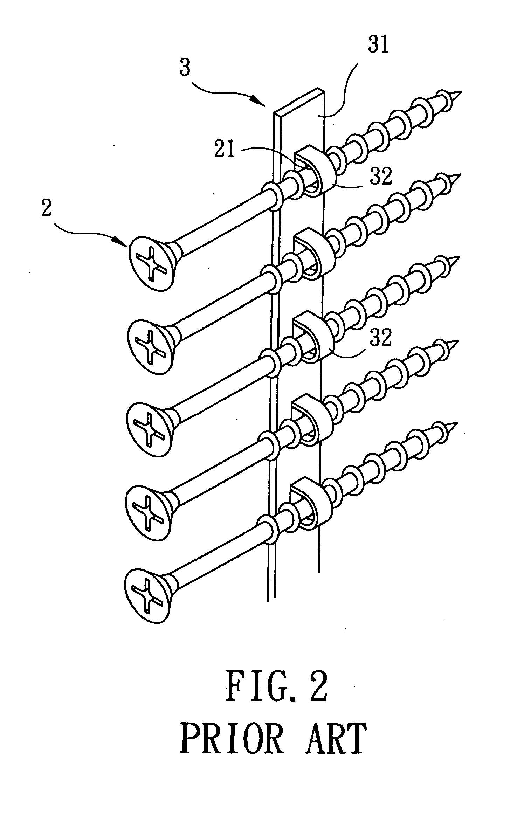

Referring to Fig. 2, another conventional screw strip 3 includes a plurality of strap-like holding rings 32 disposed on a major wall surface of an elongated strip body 31 for holding screws 2. However, since the rings 32 are formed on the elongated strip body 31 by heat sealing or by a plastic injection-molding process, the manufacturing costs associated with this conventional screw strip 3 are also relatively high.

The object of this invention is to provide a screw strip that can be manufactured at a relatively low cost.

According to this invention, a screw strip for holding a plurality of screws is provided. Each of the screws has a shank and a head. The screw strip is flexible, and includes a plurality of interconnected screw-holding strip portions, each of which comprises:
an annular planar top wall having a circular inner periphery, the inner periphery defining a hole that is sized so as to prevent passage of the head of a respective one of the screws therethrough; and
a plurality of pressed and spaced-apart holding tongues extending integrally, downwardly and inwardly from the inner periphery of the planar top wall so as to define a screw-clamping space thereamong, which is adapted to clamp the respective one of the screws therewithin.

Since the holding tongues are formed by a pressing process, the screw strip can be easily mass-produced so as to reduce the manufacturing costs of the screw strip.

These and other features and advantages of this invention will become apparent in the following detailed description of the preferred embodiments of this invention, with reference to the accompanying drawings, in which:

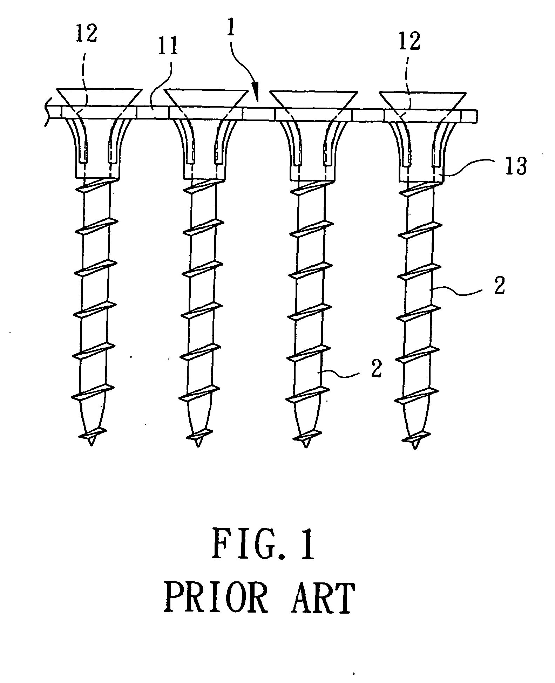

Fig. 1 illustrates a conventional screw strip;
Fig. 2 illustrates another conventional screw strip;
Fig. 3 is a perspective view of the first preferred embodiment of a screw strip according to this invention;
Fig. 4 is a fragmentary side view of the first preferred embodiment;
Fig. 5 is a sectional view of a screw-holding strip portion of the first preferred embodiment and a screw;
Fig. 6 is a fragmentary side view of the second preferred embodiment of a screw strip according to this invention;
Fig. 7 is a sectional view of a screw-holding strip portion of the second preferred embodiment and a screw;
Fig. 8 is a fragmentary side view of the third preferred embodiment of a screw strip according to this invention;
Fig. 9 is a sectional view of a screw-holding strip portion of the third preferred embodiment and a screw;
Fig. 10 is a fragmentary side view of the fourth preferred embodiment of a screw strip according to this invention;
Fig. 11 is a sectional view of a screw-holding strip portion of the fourth preferred embodiment and a screw;
Figs. 12, 13, 14 and 15 show radial arrangements of slits in the screw strip of this invention, slits in each of the screw-holding strip portions extending radially and outwardly from a central line of a screw-clamping space; and
Figs. 16, 17, 18 and 19 show tangent arrangements of slits in the screw strip of this invention, slits in each of the screw-holding strip portions extending outwardly and tangentially from a circular opening that is located at the center of the screw-clamping space.

Before the present invention is described in greater detail in connection with the preferred embodiments, it should be noted that similar elements and structures are designated by like reference numerals throughout the entire disclosure.

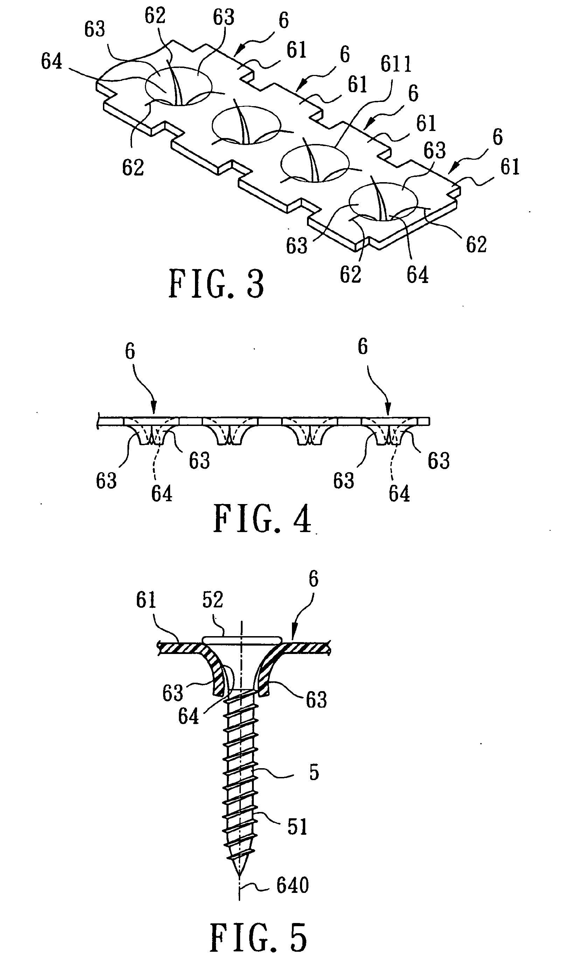

Referring to Figs. 3, 4 and 5, the first preferred embodiment of a screw strip according to this invention is provided for holding a plurality of screws 5 thereon. Each of the screws 5 has a shank 51 and a head 52 . The screw strip is flexible, and includes a plurality of interconnected screw-holding strip portions 6. Each of the strip portions 6 includes an annular planar top wall 61, a plurality of slits 62 and three pressed and spaced-apart holding tongues 63. One of the strip portions 6 and the corresponding screw 5 will be described in the succeeding paragraph.

The top wall 61 has a circular inner periphery 611 defining a hole that is sized so as to prevent passage of the head 52 of the screw 5 therethrough. The holding tongues 63 extend integrally, downwardly and inwardly from the inner periphery 611 of the top wall 61 along a curved path to define a screw-clamping space 64 thereamong. The screw-clamping space 64 is adapted to clamp the screw 5 therewithin, and has a diameter that reduces downwardly. With the slits 62 formed in the screw-holding strip portions 6, the screw strip of this invention is suitable for holding the screws 5 of different sizes.

It is noted that the screw strip of this invention is formed by extrusion using a composite material comprised of a plastic material and paper pulp, and optionally sawdust, and is subsequently punched and pressed to form the holding tongues 63 and to acquire a desired measure of flexibility. As a result, the screw strip of this invention can be easily mass-produced.

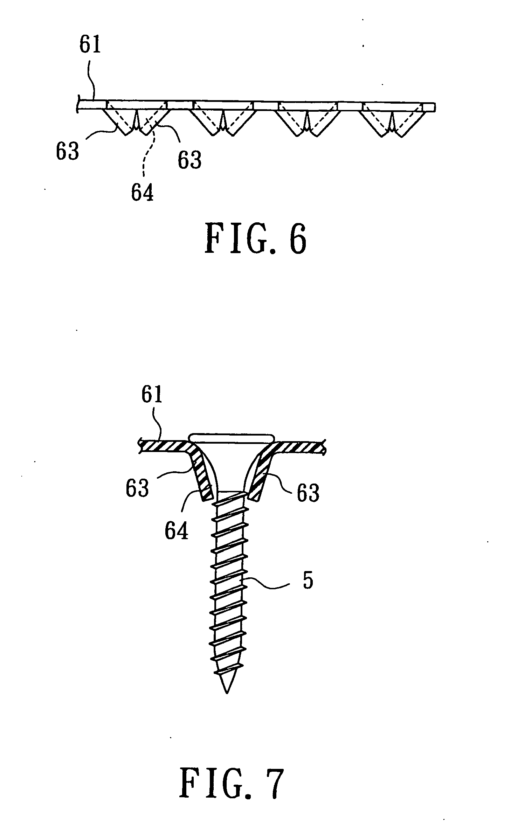

Figs. 6 and 7 show the second preferred embodiment of a screw strip according to this invention. In contrast to the first preferred embodiment, each of the screw-clamping spaces 64 in this embodiment is frustoconical, and has a diameter that reduces downwardly.

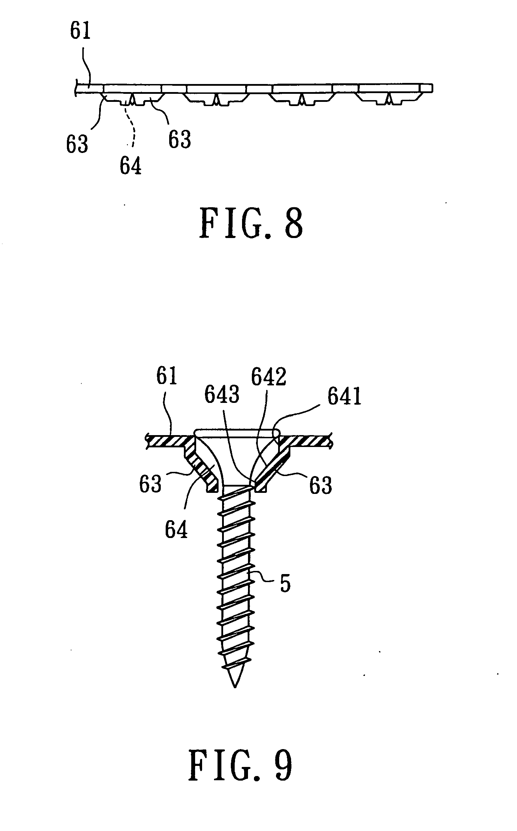

Figs. 8 and 9 show the third preferred embodiment of a screw strip according to this invention. In contrast to the first preferred embodiment, each of the screw-clamping spaces 64 in this embodiment has a cylindrical larger-diameter top end portion 641, a frustoconical intermediate portion 642 and a cylindrical smaller-diameter bottom end portion 643. The top end portion 641 is proximate to the top wall 61. The bottom end portion 643 is distal from the top wall 61, and has a diameter smaller than that of the top end portion 641. The intermediate portion 642 has a top end connected to a bottom end of the top end portion 641, and a bottom end connected to a top end of the bottom end portion 643.

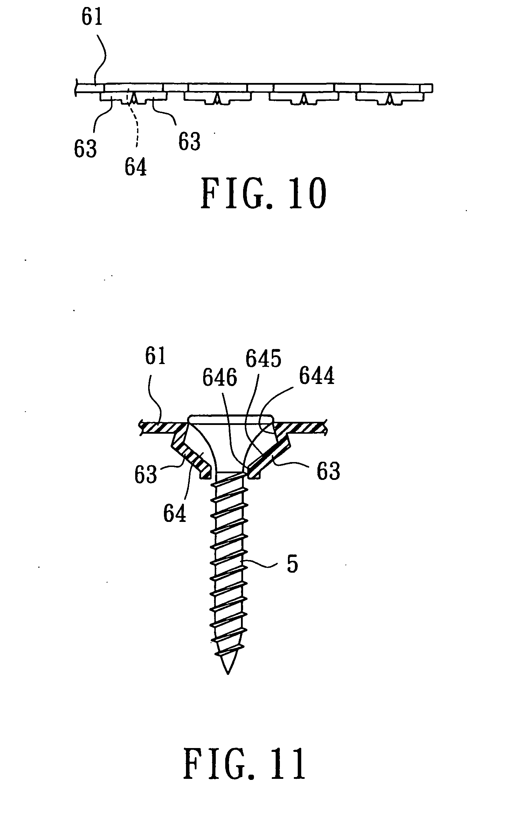

Figs. 10 and 11 show the fourth preferred embodiment of a screw strip according to this invention. In contrast to the first preferred embodiment, each of the screw-clamping space 64 in this embodiment includes a frustoconical top end portion 644, a frustoconical intermediate portion 645 and a cylindrical bottom end portion 646. The top end portion 644 is proximate to the top wall 61, and has a downwardly increasing diameter. The bottom end portion 646 is distal from the top wall 61, and has a diameter smaller than a minimum diameter of the top end portion 644. The intermediate portion 645 has a top end connected to a bottom end of the top end portion 644, and a bottom end connected to a top end of the bottom end portion 646.

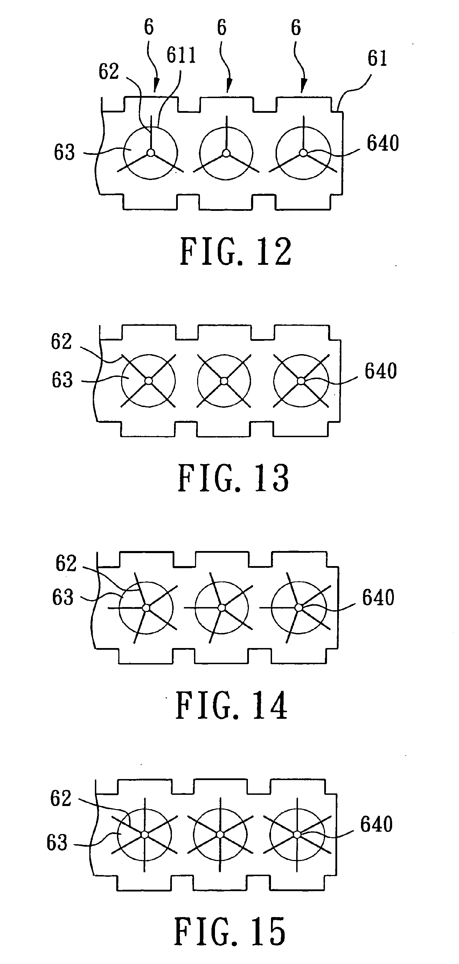

Figs. 12, 13, 14 and 15 show radial arrangements of the slits 62. In these arrangements, the slits 62 in each of the screw-holding strip portions 6 extend radially and outwardly from a central line 640 (see Figs. 5 and 12) of the corresponding screw-clamping space 64 (see Fig. 5) toward the inner periphery 611 of the corresponding top wall 61.

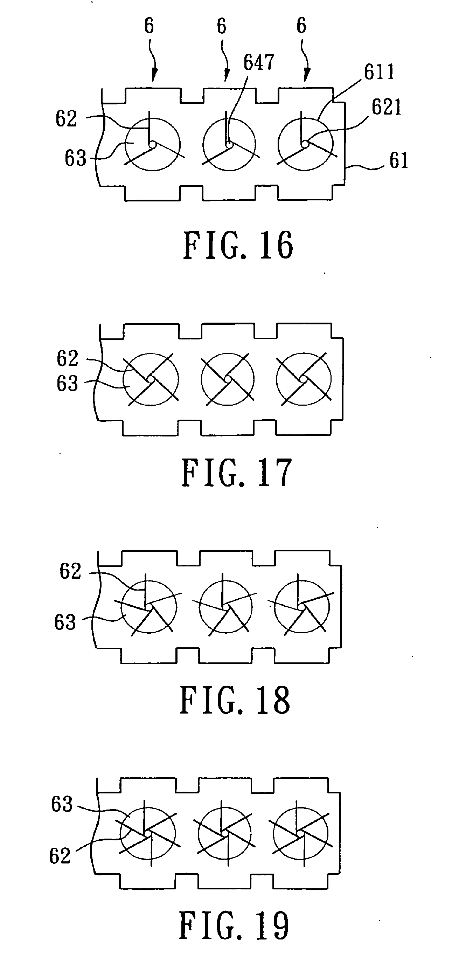

Figs. 16, 17, 18 and 19 show tangent arrangements of the slits 62. In these arrangements, the holding tongues 63 of each of the screw-holding strip portions 6 define cooperatively a circular opening 647 thereamong, and each of the slits 62 in each of the screw-holding strip portions 6 extends tangentially from the circular opening 647 toward the inner periphery 611 of the top wall 61.

The number of the slits 62 in each of the screw-holding strip portions 6 can be varied, as shown in Figs. 12 to 19.

## Claims

1. A screw strip for holding a plurality of screws (5), each of the screws (5) having a shank (51) and a head (52), the screw strip being flexible and including a plurality of interconnected screw-holding strip portions (6), each of the screw-holding strip portions (6) including
an annular planar top wall (61) having a circular inner periphery (611), the inner periphery (611) defining a hole that is sized so as to prevent passage of the head (52) of a respective one of the screws (5) therethrough; the screw strip being **characterized in that** each of the screw-holding strip portions (6) further includes
a plurality of pressed and spaced-apart holding tongues (63) extending integrally, downwardly and inwardly from the inner periphery (611) of the planar top wall (61) so as to define a screw-clamping space (64) thereamong, which is adapted to clamp the respective one of the screws (5) therewithin.

2. The screw strip as claimed in Claim 1, further **characterized in that** each of the holding tongues (63) extends from the inner periphery (611) of the top wall (61) along a curved path, the screw-clamping space (64) having a diameter that reduces downwardly.

3. The screw strip as claimed in Claim 1, further **characterized in that** the screw-clamping space (64) is frustoconical, and has a diameter that reduces downwardly.

4. The screw strip as claimed in Claim 1, further **characterized in that** the screw-clamping space (64) includes:
a cylindrical larger-diameter top end portion (641) proximate to the top wall (61);
a cylindrical smaller-diameter bottom end portion (643) distal from the top wall (61) and having a diameter smaller than that of the larger-diameter top end portion (641) ; and
a frustoconical intermediate portion (642) having a top end connected to a bottom end of the larger-diameter top end portion (641), and a bottom end connected to a top end of the smaller-diameter bottom end portion (643).

5. The screw strip as claimed in Claim 1, further **characterized in that** the screw-clamping space (64) includes:
a frustoconical top end portion (644) proximate to the top wall (61) and having a downwardly increasing diameter;
a cylindrical bottom end portion (646) distal from the top wall (61) and having a diameter smaller than a minimum diameter of the top end portion (644); and
a frustoconical intermediate portion (645) having a top end connected to a bottom end of the top end portion (644), and a bottom end connected to a top end of the bottom end portion (646).

6. The screw strip as claimed in Claim 1, further **characterized in that** each of the screw-clamping spaces (64) has a central line (640), any two adjacent ones of the holding tongues (63) defining a slit (62) therebetween, the slits (62) in each of the screw-holding strip portions (6) extending radially and outwardly from the central line (640) toward the inner periphery (611) of the top wall (61).

7. The screw strip as claimed in Claim 1, further **characterized in that** the holding tongues (63) of each of the screw-holding strip portions (6) define cooperatively a circular opening (647) thereamong, any two adjacent ones of the holding tongues (63) defining a slit (62) therebetween, each of the slits (62) extending from a corresponding one of the circular openings (647) toward the inner periphery (611) of a corresponding one of the top walls (61) along a tangent direction of the corresponding one of the circular openings (647).

## Patentansprüche

1. Ein Schraubenband zum Halten einer Mehrzahl von Schrauben (5), wobei jede Schraube (5) einen Schaft (51) und einen Kopf (52) aufweist, wobei das Schraubenband flexibel ist und eine Mehrzahl von miteinander verbundenen Schraubenhaltebandabschnitte (6) umfasst, jeder Schraubenhaltebandabschnitt (6) umfassend
eine ringförmige ebene obere Wand (61), die einen kreisförmigen Innenumfang (611) aufweist, wobei der Innenumfang (611) ein Loch definiert, das dimensioniert ist, um den Durchgang des Kopfes (52) einer jeweiligen Schraube (5) durch dieses zu verhindern; wobei das Schraubenband **dadurch gekennzeichnet ist, dass** jeder Schraubenhaltebandabschnitt (6) weiterhin beinhaltet
eine Mehrzahl von geprägten und beabstandeten Haltezungen (63), die sich einstückig, abwärts und nach innen von dem Innenumfang (611) der ebenen oberen Wand (61) aus erstrecken, um dazwischen einen Schraubenfeststellraum (64) zu definieren, der dazu angepasst ist, die jeweilige Schraube (5) damit einzuspannen.

2. Schraubenband nach Anspruch 1, weiterhin **dadurch gekennzeichnet, dass** jede Haltezunge (63) sich von dem Innenumfang (611) der oberen Wand (61) aus entlang eines kurvenförmigen Wegs erstreckt, wobei der Schraubenfeststellraum (64) einen Durchmesser hat, der sich nach unten hin verringert.

3. Schraubenband nach Anspruch 1, weiterhin **dadurch gekennzeichnet, dass** der Schraubenfeststellraum (64) kegelstumpfförmig ist und einen Durchmesser hat, der sich abwärts verringert.

4. Schraubenband nach Anspruch 1, weiterhin **dadurch gekennzeichnet, dass** der Schraubenfeststellraum (64) umfasst:
einen oberen Endabschnitt (641) mit einem zylindrischen größeren Durchmesser in der Nähe der oberen Wand (61);
einen unteren Endabschnitt (643) mit zylindrischem kleineren Durchmesser, der von der oberen Wand (61) entfernt ist und einen Durchmesser aufweist, der kleiner ist als der von dem oberen Endabschnitt mit größerem Durchmesser (641);
einen kegelstumpfförmigen Zwischenabschnitt (642), der ein oberes Ende aufweist, das mit einem unteren Ende des oberen Endabschnittes (641) verbunden ist, und ein unteres Ende, das mit einem oberen Ende des unteren Endabschnittes mit kleinerem Durchmesser (643) verbunden ist.

5. Das Schraubenband nach Anspruch 1, weiterhin **dadurch gekennzeichnet, dass** der Schraubenfeststellraum (64) umfasst:
einen kegelstumpfförmigen oberen Endabschnitt (644), der sich in der Nähe der oberen Wand (61) befindet und der einen abwärts zunehmenden Durchmesser hat;
einen zylindrischen unteren Endabschnitt (646), der entfernt von der oberen Wand (61) liegt und einen Durchmesser hat, der kleiner als ein minimaler Durchmesser des oberen Endabschnitts (644) ist; und
einen kegelstumpfförmigen Zwischenabschnitt (645), der ein oberes Ende hat, das mit einem unteren Ende des oberen Endabschnittes (644) verbunden ist, und ein unteres Ende, das mit einem oberen Ende des unteren Endabschnitts (646) verbunden ist.

6. Schraubenband nach Anspruch 1, weiterhin **dadurch gekennzeichnet, dass** jeder Schraubenfeststellraum (64) eine mittige Achse (640) hat, wobei jeweils zwei benachbarte Haltezungen (63) einen Schlitz (62) zwischen sich definieren, wobei die Schlitze (62) in jedem Schraubenhaltebandabschnitt (6) sich radial und auswärts von der mittigen Achse (640) aus zum Innenumfang (611) der oberen Wand (61) hin erstrecken.

7. Schraubenband nach Anspruch 1, weiterhin **dadurch gekennzeichnet, dass** die Haltezungen (63) von jedem Schraubenhaltebandabschnitt (6) zusammenwirkend eine kreisförmige Öffnung (647) zwischen sich definieren, wobei jeweils zwei miteinander benachbarte Haltezungen (63) einen Schlitz (62) zwischen sich definieren, wobei jeder Schlitz (62) sich von einer entsprechenden kreisförmigen Öffnung (647) aus zum Innenumfang (611) einer entsprechenden oberen Wand (61) entlang einer tangentialen Richtung einer entsprechenden kreisförmigen Öffnung (647) hin erstreckt.

## Revendications

1. Bandeau à vis pour supporter une pluralité de vis (5), chaque vis (5) ayant une tige (51) et une tête (52), le bandeau à vis étant flexible et comportant une pluralité de sections de bandeaux supportant des vis (6) interconnectées, chaque section de bandeaux supportant des vis (6) comportant
une paroi supérieure annulaire, plane (61) qui a une circonférence intérieure circulaire (611), la circonférence intérieure (611) définissant un trou qui est dimensionné pour empêcher le passage de la tête (52) d'une vis respective (5) ; le bandeau à vis étant **caractérisé en ce que** chaque section de bandeau supportant les vis (6) comporte en outre une pluralité de langues de support frappées à distance les unes des autres (63), s'étendant d'un seul tenant vers le bas et vers l'intérieur depuis la circonférence intérieure (611) de la paroi supérieure plane (61) pour définir un espace de serrage par vis (64) qui est adapté à serrer la vis respective (5).

2. Bandeau à vis selon la revendication 1, en outre **caractérisé en ce que** chaque langue de support (63) s'étend depuis la circonférence intérieure (611) de la paroi supérieure (61) selon un chemin courbé, l'espace de serrage par vis (64) ayant un diamètre qui diminue vers le bas.

3. Bandeau à vis selon la revendication 1, en outre **caractérisé en ce que** l'espace de serrage par vis (64) a une forme tronconique et a un diamètre qui diminue vers le bas.

4. Bandeau à vis selon la revendication 1, en outre **caractérisé en ce que** l'espace de serrage par vis (64) comporte:
une section cylindrique de diamètre plus grand d'extrémité supérieure (641) à proximité de la paroi supérieure (61) ;
une section d'extrémité inférieure cylindrique (643) de diamètre plus petit qui est loin de la paroi supérieure (61) et dont le diamètre est plus petit que celui de la section d'extrémité supérieure (641) ayant le diamètre plus grand (641), et
une section intermédiaire de forme tronconique (642) qui a une extrémité supérieure liée à une extrémité inférieure de la section d'extrémité supérieure (641), et une extrémité inférieure liée à une extrémité supérieure de la section d'extrémité inférieure (643) de diamètre plus petit.

5. Bandeau à vis selon la revendication 1, en outre **caractérisé en ce que** l'espace de serrage par vis (64) comporte:
une section d'extrémité supérieure (644) de forme tronconique à proximité de la paroi supérieure (61) et qui a un diamètre augmentant vers le bas ;
une section cylindrique d'extrémité inférieure (646) loin de la paroi supérieure (61) et qui a un diamètre plus petit qu'un diamètre minimum de la section d'extrémité supérieure (644) ; et
une section intermédiaire de forme tronconique (645) qui a une extrémité supérieure liée à une extrémité inférieure de la section d'extrémité supérieure (644), et une extrémité inférieure liée à une extrémité supérieure de la section d'extrémité inférieure (646).

6. Bandeau à vis selon la revendication 1, en outre **caractérisé en ce que** chaque espace de serrage par vis (64) a un axe central (640), dans quel cas respectivement deux langues de support adjacentes (63) définissent une fente (62) entre elles, dans quel cas les fentes (62) dans chaque section de bandeaux supportant des vis (6), s'étendent radialement et vers l'extérieur depuis l'axe central (640) vers la circonférence intérieure (611) de la paroi supérieure (61).

7. Bandeau à vis selon la revendication 1, en outre **caractérisé en ce que** les langues de support (63) de chaque section de bandeaux supportant des vis (6) définissent de manière coopérative une ouverture circulaire (647) entre elles, toutes deux des langues de support adjacentes ??? (63) définissant une fente (62) entre elles, chaque fente (62) s'étendant depuis une ouverture circulaire (647) vers la circonférence intérieure (611) d'une paroi supérieure (61) correspondante le long d'une direction tangentielle des ouvertures circulaires correspondantes (647).
